# EUROPEAN PATENT APPLICATION

(11) **EP 1 727 338 A2**
(43) Date of publication of application: **29.11.2006**
(21) Application number: 06010167.2
(22) Date of filing: 17.05.2006
(51) Int. Cl.: H04M 1/725

(54) **Method for displaying event information on a mobile terminal**

(30) Priority: 27.05.2005 KR 20050044969
(71) Applicant: Samsung Electronics Co., Ltd., Suwon-si, Gyeonggi-Do (KR)
(72) Inventor: Won, Jong-Sang, c/o Samsung Electronics Co., Ltd., Suwon-si, Gyeonggi-do (KR); Choe, Gwang-Woo, c/o Samsung Electronics Co. Ltd., Suwon-si, Gyonggi-do (KR)
(74) Representative: Lang, Johannes

(57) **Abstract**

Disclosed is a method for displaying event information on a mobile terminal, comprising the steps of: selecting a specific date; searching for event information registered on the selected date; and displaying the event information registered on the selected date.

## Description

### BACKGROUND OF THE INVENTION

### Field of the Invention:

The present invention relates to a mobile communication terminal. More particularly, the present invention relates to a method for displaying event information on a mobile communication terminal.

### Description of the Related Art:

Mobile communication terminals have been developed that store and display large amounts of data. However, since the display screen of a mobile terminal is significantly smaller than that on a PC, a mobile terminal is limited in its ability to display large amounts of data at once. To overcome this limitation, users of mobile terminals have to use directional keys to scroll up or down in order to view all of the data. It is time-consuming and causes excessive power consumption to repeatedly press the keys when scrolling through the large amount data being displayed.

When a user wishes to view events that previously occurred in a mobile terminal, he or she must scroll down the event information displayed using a down directional key. A list of events is generally displayed in reverse chronological order, with the latest event at the top of the list. Therefore, the user has to press the directional key repeatedly to search for an event that occurred long ago. In the prior art, events are sorted into incoming/outgoing calls, emails, text messages, to-do list alerts and other types of events so that only a single type of events can be displayed at any given time. Therefore, it takes time for the user to check events of all event types that occurred in the mobile terminal on a specific date.

Accordingly, there is a need for an improved mobile communication terminal which enables viewing large amounts of data on a display screen without having to excessively press keys to view all the data so as to save time and avoid excessive power consumption. Additionally, there is a need for an improved mobile communication terminal which enables viewing older event data without having to excessively press keys and to more easily check events of all types registered on a specific date so as to save time.

### SUMMARY OF THE INVENTION

An aspect of the present invention is to address at least the above problems and/or disadvantages and to provide at least the advantages described below. Accordingly, an aspect of the present invention is to provide a method for displaying event information on a mobile terminal. Thereby, enabling a user to easily confirm events registered on a specific date.

In order to accomplish the above object of the present invention, there is provided a method for displaying event information on a mobile terminal, which comprises the steps of: allowing a user to select a specific date; searching for event information registered on the selected date; and displaying the event information registered on the selected date.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features, and advantages of certain embodiments of the present invention will be more apparent from the following description taken in conjunction with the accompanying drawings, in which:
FIG. 1 is a flow chart showing a process for displaying event information on a mobile terminal according to an embodiment of the present invention; and
FIGs. 2A through 2D illustrate example displays of event information according to an embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

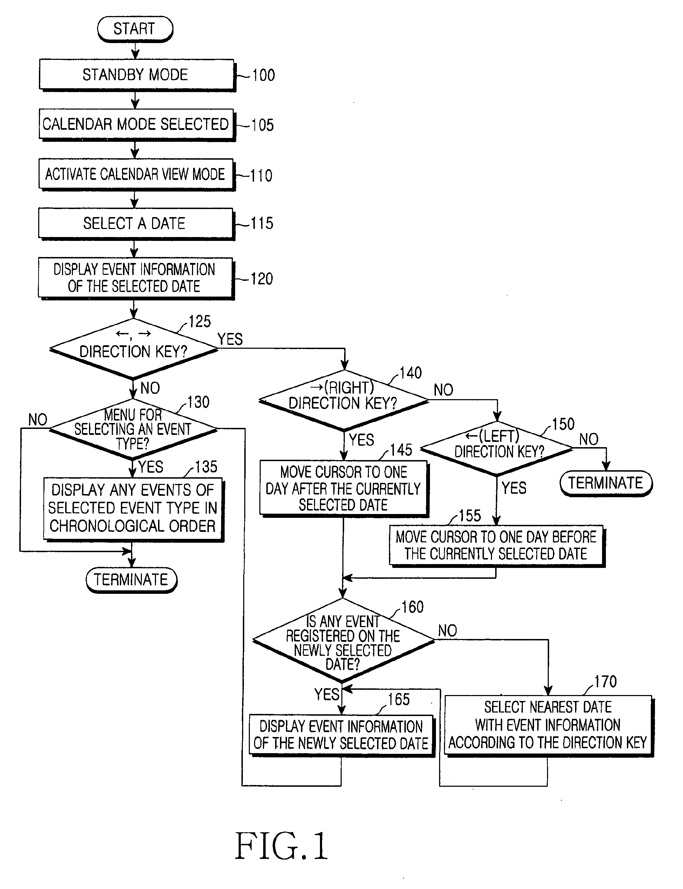

FIG. 1 is a flow chart showing a process for displaying event information on a mobile terminal according to an embodiment of the present invention. Referring to FIG. 1, when a key input signal is detected in a standby mode (step 100), a controller of the mobile terminal implements a function corresponding to the signal. In this regard, the controller determines whether the signal is generated from a key selecting a calendar mode for inputting or outputting various data, such as schedules for specified dates. When the calendar mode is selected (step 105), the controller activates a calendar view mode (step 110) to display a calendar-like image of the current month on a display screen. At this time, the controller may visually differentiate dates having registered events so as to be distinguished from dates not having registered events.

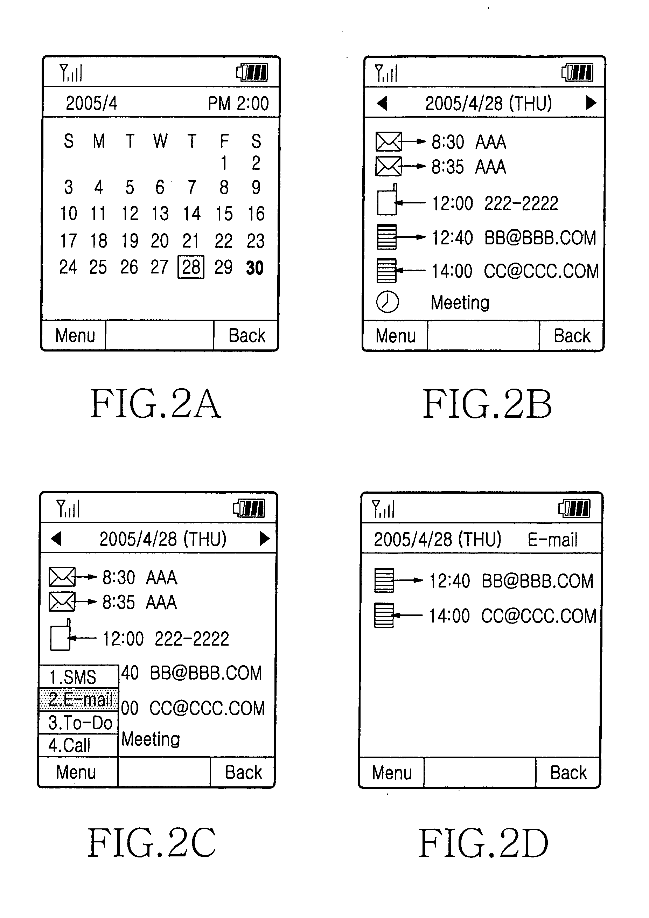

In the calendar view mode, the user may select a date using a directional key or an alphanumeric key to view event information of the selected date (step 115). Then the controller displays the event information registered on the selected date on the display screen as illustrated in FIG. 2B (step 120). The event information includes any messages sent or received, incoming or outgoing calls, emails sent or received and to-do items registered on the selected date. Under the control of the controller, the various events that occurred on the selected date are displayed in chronological order from earliest to latest. At this time, icons indicating different types of events that occurred on the selected date are displayed together with their respective event information.

When a key is pressed during the display of the event information, the controller determines whether the pressed key is a left (←) or right (→) directional key (step 125). When the left or right directional key is pressed once, a cursor is moved to one day before or after the currently selected date on the calendar-like image. When the left or right directional key is not pressed, the controller then determines whether the pressed key is a menu key for displaying events of one type registered on the selected date (step 130). When the user selects a specific type of event from the menu as illustrated in FIG. 2C, the controller displays only events of the selected type in ascending chronological order from earliest to latest (step 135). FIG. 2C is a view showing the selection of a specific event type (email) during the display of events of multiple types as illustrated in FIG. 2B. Upon selection of the email events, the controller displays only the information about email messages sent or received on the selected date in chronological order from earliest to latest.

The information about email messages includes the time when each email message was sent or received and each recipient's or sender's email address.

When the controller determines that the left or right directional key has been pressed (step 125), it further determines that the right (→) directional key has been pressed to move the cursor to the right (step 140). In the affirmative, the controller moves the cursor to one day after the currently selected date (step 145). Then the controller determines whether any events have occurred on the newly selected date (step 160) and displays the corresponding event information (step 165). If no event has occurred on the newly selected date, the controller displays a message informing the absence of event information for the date and moves the cursor to the nearest date having event information (step 170).

Subsequently, the controller determines whether the user has pressed a menu key for displaying events of one type during the display of the event information registered on the newly selected date (step 130). When the user selects a specific event type from the menu, the controller displays only the events of the selected type in ascending chronological order from earliest to latest (step 135).

When the controller determines that the pressed key is not the right (→) directional key (step 140), it further determines if the left (←) directional key has been pressed (step 150). In the affirmative, the controller moves the cursor to the left to select one day before the currently selected date (step 155). Then the controller determines whether any events have occurred on the newly selected date (step 160) and displays the corresponding event information (step 165). If no event has occurred on the newly selected date, the controller moves the cursor to the nearest date having event information (step 170).

Subsequently, when the user selects a specific type of event during the display of the event information of the newly selected date, the controller displays only the events of the selected type in ascending chronological order from earliest to latest (step 135).

As explained above, the user may select a specific date for viewing events that occurred on that date. Then all the events registered in the mobile terminal on the selected date, including incoming/outgoing calls, messages, emails and to-do list alerts, are displayed together with corresponding event type icons. When the user presses a directional key to move the cursor to select another date, the controller of the mobile terminal determines whether any events have occurred on the newly selected date and displays the corresponding event information. If no event has occurred on the newly selected date, the controller moves the cursor to the nearest date having events registered and displays the corresponding event information.

According to an embodiment of the invention, when a user wishes to view event information of a specific date, he or she has to activate the calendar view mode through a predetermined menu and select the specific date using a directional key or an alphanumeric key. However, it is also possible to first select a specific event type to be displayed and then designate a date.

While the invention has been shown and described with reference to certain embodiments thereof, it will be understood by those skilled in the art that various changes in form and details may be made therein without departing from the spirit and scope of the invention as defined by the appended claims.

## Claims

1. A method for displaying event information on a mobile terminal, comprising the steps of:
selecting a specific date;
searching for event information registered on the selected date; and
displaying the event information registered on the selected date.

2. The method as claimed in claim 1, wherein said event information comprises one or a plurality of events with each of the one or plurality of events being one of any of multiple event types, the multiple event types comprising messages, incoming or outgoing calls, emails and to-do lists.

3. The method as claimed in claim 1, wherein said step of selecting a specific date includes:
selecting a calendar mode in the mobile terminal; and
selecting the specific date in a calendar view mode.

4. The method as claimed in claim 3, wherein dates with registered event information are visually differentiated on a calendar image displayed in the calendar view mode so as to be distinguished from dates not having registered event information.

5. The method as claimed in claim 1, wherein for event information registered on the selected date, only events of a single event type are displayed when the single event type is selected by a key input, the single event type being any one of multiple event types, including messages, incoming or outgoing calls, email and to-do lists.

6. The method as claimed in claim 2, wherein for event information registered on the selected date, only events of a single event type are displayed when the single event type is selected by a key input, the single event type being any one of multiple event types, including messages, incoming or outgoing calls, email and to-do lists.

7. The method as claimed in claim 1, wherein new event information of a single event type can be added to the event information registered on the selected day, the single event type being any one of multiple event types, including messages, incoming or outgoing calls, email and to-do lists.

8. The method as claimed in claim 2, wherein new event information of a single event type can be added to the event information registered on the selected day, the single event type being any one of multiple event types, including messages, incoming or outgoing calls, email and to-do lists.

9. The method as claimed in claim 1, wherein said event information registered on the selected date comprises one or a plurality of events and is displayed such that each event of the one or plurality of events is displayed with an associated indicator that represents a type of event.

10. The method as claimed in claim 1, wherein said event information registered on the selected date comprises one or a plurality of events displayed in chronological order from earliest to latest.

11. The method as claimed in claim 1, wherein said event information registered on the selected date comprises one or a plurality of events and is sorted and displayed according to event types.

12. The method as claimed in claim 1, wherein said event information registered on the selected date comprises one or a plurality of events and is displayed together with indications of event origination or reception when the events are any one of multiple event types, including messages, calls and email.

13. The method as claimed in claim 1, further comprising the step of: pressing a predetermined key during the display of the event information to newly select one day before or after the currently selected date and display event information corresponding to the newly selected date.

14. The method as claimed in claim 13, wherein the nearest date with event information is selected to display the event information if no event has occurred one day before or after the currently selected date.

15. A method for displaying event information on a mobile terminal, comprising the steps of:
inputting a specific date;
when a user selects a single event type of multiple event types, displaying any events of the selected single event type that are registered on the specific date; and
when a predetermined key is pressed to select another single event type of the multiple event types, displaying any events of the newly selected another single event type that are registered on the specific date.

16. The method as claimed in claim 15, wherein said multiple event types include messages, incoming or outgoing calls, emails and to-do lists.

17. A method for displaying event information on a mobile terminal, comprising the steps of:
inputting a specific date and at least one event type of multiple event types;
displaying event information registered on the specific date; and
when a predetermined key is pressed to select another event type of the multiple event types, displaying any event of the newly selected event type that is registered on the specific date.

18. The method as claimed in claim 17, wherein said multiple event types include messages, incoming or outgoing calls, emails and to-do lists.
